# EUROPEAN PATENT APPLICATION

(11) **EP 4 708 477 A1**
(43) Date of publication of application: **11.03.2026**
(21) Application number: 24819625.5
(22) Date of filing: 07.06.2024
(51) Int. Cl.: H01M 50/126, H01M 50/121, H01M 50/131, H01M 50/105, B32B 15/08, B32B 7/12

(54) **CELL POUCH FILM, PACKAGING STRUCTURE COMPRISING SAME, AND METHOD FOR STORING CORRESPONDING CELL POUCH FILM**

(30) Priority: 07.06.2023 KR 20230072843; 07.06.2023 KR 20230072844
(71) Applicant: Youlchon Chemical Co., Ltd., Seoul 07057 (KR)
(72) Inventor: KIM, Yoohan, Ansan-si, Gyeonggi-do 15430 (KR); KIM, Huihun, Ansan-si, Gyeonggi-do 15430 (KR); SONG, Nok Jung, Seoul 07057 (KR); SONG, Moonkyu, Ansan-si, Gyeonggi-do 15430 (KR); SHIN, Sung Chul, Ansan-si, Gyeonggi-do 15430 (KR); HAN, Hee Sik, Ansan-si, Gyeonggi-do 15430 (KR)
(74) Representative: V.O.
(86) International application number: PCT/KR2024/007831
(87) International publication number: WO 2024/253474

(57) **Abstract**

The present specification relates to a cell pouch film, a packaging structure comprising same, and a method for storing the corresponding cell pouch film. Therefore, the moisture regain of the cell pouch film is controlled such that moldability, the level of thermal deformation bubbles, and mechanical properties can all be excellent.

## Description

### [Technical Field]

In the present specification, a cell pouch film, a packaging structure comprising the same, and a method for storing the corresponding cell pouch film are disclosed.

### [NATIONAL RESEARCH AND DEVELOPMENT PROJECT THAT SUPPORTED THE INVENTION]

[Project Unique Number] 1415185612
[Project Number] 20022450
[Department Name] Ministry of Trade, Industry and Energy
[Project Management (Specialized) Institution] Korea Evaluation Institute of Industrial Technology
[Research Project Name] Materials, Components, and Package-Type (Outstanding Company)
[Research Subject Name] Development of a Next-Generation Secondary Battery Pouch Capable of Achieving Twice or more High Adhesion Strength (60°C)
[Contribution Rate] 1/1
[Project execution Institution] Youlchon Chemical Co., Ltd.
[Research period] January 1, 2023 to December 31, 2023

### [Background Art]

In general, a pouch-type battery used in an electric vehicle or the like has an advantage of being easily changeable in shape and having high energy density in comparison with a cylindrical type or a prismatic type. Such a cell pouch is an outer material (or encapsulation material) surrounding an electrode group of a battery and an electrolyte, and should satisfy required properties such as adhesion between layers composed of a metal thin film and a polymer, heat fusion strength, electrolyte resistance, airtightness, moisture penetration property, formability, and the like.

Korean Patent No. 10-2042252 discloses a battery cell comprising a metal piece for blocking penetration of moisture. However, a conventional cell pouch film has a problem in that formability is poor, or mechanical properties such as yield strength or heat seal strength are poor, or appearance is defective due to bubble generation or the like by thermal deformation. Accordingly, there is a need for development of a cell pouch film capable of satisfying formability, thermal deformation appearance property, and mechanical property.

### [Disclosure]

### [Technical Problem]

In one aspect, the present invention is directed to providing a cell pouch film in which moisture regain of the cell pouch film is controlled such that formability, thermal deformation appearance property, and mechanical property are excellent, and a secondary battery encapsulated by using the same and a manufacturing method thereof.

In another aspect, the present invention is directed to providing a storing method for maintaining the moisture regain of the cell pouch film in a constant state and a packaging structure used in a distribution process of the corresponding cell pouch film.

### [Technical Solution]

In exemplary embodiments of the present invention, there is provided a cell pouch film comprising an outer layer including at least nylon, a barrier layer made of metal, and a sealant layer, wherein the cell pouch film has a moisture regain, measured as described below, of 1300 ppm or less,

### [Method of measuring Moisture regain of Cell Pouch Film]

preparing a specimen of the cell pouch film cut into 60 mm × 40 mm in longitudinal direction (Machine Direction, MD) × width direction (Transverse Direction, TD), dividing the specimen into four equal parts of 15 mm × 40 mm in the longitudinal direction (MD) × width direction (TD), placing the four divided specimens into a vial and sealing the vial, placing the sealed vial into a moisture measuring device (e.g., Metrohm 917 Coulometer), measuring moisture content vaporized from the vial at a temperature of 150°C, and confirming the measured moisture content as the moisture regain of the cell pouch film, in which measurement conditions are a temperature of 150°C and a gas flow rate of 50 mL/min.

In addition, in exemplary embodiments of the present invention, there is provided a method for storing a cell pouch film, comprising: storing a cell pouch film in an environment of a temperature of 25°C and relative humidity of 5% or more and less than 25%, so that a saturated moisture regain of the cell pouch film becomes 1300 ppm or less.

In addition, in exemplary embodiments of the present invention, there is provided a cell pouch packaging structure comprising a cell pouch, comprising: the cell pouch film being wound; and an inner packaging material surrounding the wound cell pouch film in at least one layer or more, in which the inner packaging material has a water vapor transmission rate (WVTR) of 0.1 g/m²·day to 1.0 g/m²·day.

In addition, in exemplary embodiments of the present invention, there is provided a cell pouch comprising the above-described cell pouch film.

In addition, in exemplary embodiments of the present invention, there is provided a secondary battery encapsulated with the above-described cell pouch film.

In addition, in exemplary embodiments of the present invention, there is provided a method of manufacturing a secondary battery comprising: encapsulating a secondary battery with the above-described cell pouch film.

### [Advantageous Effects]

According to exemplary embodiments of the present invention, a moisture regain of a cell pouch film is controlled so that formability, a level of thermal deformation bubbles, and mechanical properties such as yield strength, heat seal strength, and the like are all excellent.

### [Description of Drawings]

FIG. 1 is a graph showing a change of moisture regain according to temperature, relative humidity, and time of a cell pouch film according to an embodiment of the present invention.
FIG. 2 is an image showing an evaluation criterion of thermal deformability of a cell pouch film according to an embodiment of the present invention.

### [Mode for Disclosure]

Hereinafter, exemplary embodiments of the present invention will be described in detail with reference to the accompanying drawings.

The embodiments of the present invention disclosed herein are illustrated for purposes of description only, and the embodiments of the present invention may be practiced in various forms and should not be interpreted as limiting to the embodiments described herein. The present invention is subject to various modifications and may have various forms, and the embodiments are not intended to limit the present invention to any particular disclosure form, but are to be understood to include all modifications, equivalents, or substitutions that fall within the scope of the teachings and art of the present invention.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

Throughout the specification, when one component such as a layer, a film, a region, or a plate is described as being positioned "above" or "on" another component, one component can be positioned "directly on another component, and one component can also be positioned on another component with other components interposed therebetween. Throughout the specification, the terms such as "first," "second," and other numerical terms may be used herein only to describe various elements, but these elements should not be limited by these terms. These terms are used only to distinguish one constituent element from another constituent element.

In the present specification, the term "cell" means a battery and may include, in the broadest sense, all kinds of batteries such as secondary batteries including lithium ion batteries, lithium polymer batteries, and the like, and portable storage batteries, and the like.

In the present specification, the term "cell pouch" means that cell components such as a positive electrode, a negative electrode, a separator, and the like are impregnated with an electrolyte and accommodated, and includes, in the broadest sense, all films of laminated structures that are processed into a pouch shape, a box shape, or the like in consideration of gas barrier property, bendability, electrolyte resistance, heat sealability, and the like to accommodate the cell components.

In the present specification, barrier property means a performance of blocking water vapor from outside of a battery.

In the present specification, "formability (or moldability)" means that, when forming is performed on a specimen obtained by cutting a cell pouch film and a depth is measured, if none of 10 out of 10 specimens are broken at that depth, a deeper depth is applied, and when even one is broken, the immediately preceding depth is referred to as a maximum forming depth, and this is referred to as formability. In a case of a medium or large secondary battery, when a maximum forming depth is particularly 16 mm or more, formability may be regarded as excellent.

In the present specification, moisture regain or moisture content of a cell pouch film may be confirmed, for example, by cutting the cell pouch film into a predetermined length, dividing it into four parts, placing it in a sealed vial, placing the sealed vial in a moisture meter (for example, Metrohm 917 Coulometer), and measuring (unit: ppm) moisture vaporized from the sealed vial under a predetermined temperature and gas flow condition. The moisture meter and the measuring method of moisture are well known to a person skilled in the art.

In the present specification, saturated moisture regain or saturated moisture content means that, when the cell pouch film is stored in a room having a predetermined temperature and relative humidity, after a certain time, the moisture regain or moisture content of the cell pouch film no more increases and converges to a constant level, and such a constant level of moisture regain or moisture content of the cell pouch film that no more increases and converges is particularly referred to as the saturated moisture regain or saturated moisture content.

In the present specification, thermal deformation means that, when a pouch having a predetermined amount or more of moisture undergoes a heat sealing process during a cell pouch manufacturing process, moisture in a nylon film is vaporized and expressed as bubbles.

In the present specification, an evaluation of thermal deformability, thermal deformation appearance property, or thermal deformation bubble property (level) means an evaluation of checking whether bubbles occur in the pouch through heat sealing.

In the present specification, "relative humidity (RH)" means a value expressed as a percentage (%) of a ratio of an amount of water vapor contained in current air to saturated vapor pressure that can be maximally contained in a certain volume of air.

In the present specification, mechanical property means including at least yield strength and/or heat seal strength.

### Description of Exemplary Embodiments

The inventors have found that a moisture regain or moisture content (hereinafter, may be referred to as moisture regain) of a cell pouch film not only affects formability of the cell pouch film, but also affects mechanical properties such as a level of thermal deformation bubbles (thermal deformation appearance property), heat seal strength, and yield strength, and have reached the present invention through repeated research.

That is, as can be confirmed from experimental examples described later, since formability increases as the moisture regain of the cell pouch film increases, but the mechanical properties such as level of thermal deformation bubbles, heat seal strength, yield strength, and the like may deteriorate, it is necessary to control the moisture regain of the cell pouch film so that formability is excellent while the level of thermal deformation bubbles and the mechanical properties are good.

In this regard, the cell pouch film is composed of a barrier layer, a sealant layer inside thereof, and an outer layer outside thereof. The outer layer includes at least nylon and may be formed of, for example, a polyethylene terephthalate film and a nylon film.

In the cell pouch film, although components or thicknesses of each of the barrier layer, the sealant layer, and the outer layer, thicknesses or components of an adhesion layer between the barrier layer and the sealant layer and between the barrier layer and the outer layer, or the like may vary, with respect to the moisture regain of the whole cell pouch film, influences of other variables are minor, and particularly the nylon film among the outer layer is considered to have a large influence on the moisture regain of the entire cell pouch film.

Hereinafter, the cell pouch film, a storing method for controlling the moisture regain of the corresponding cell pouch film to a predetermined level, and a packaging structure for maintaining the moisture regain of the cell pouch film at a desired level during a distribution process of the cell pouch film will be described.

### Cell Pouch Film

In exemplary embodiments of the present invention, there is provided a cell pouch film comprising an outer layer including at least nylon, a barrier layer made of metal, and a sealant layer, wherein a moisture regain measured as described below is 1300 ppm or less.

### [Method of measuring Moisture regain of Cell Pouch Film]

A specimen of the cell pouch film is prepared by cutting into 60 mm × 40 mm in a longitudinal direction (Machine Direction, MD) × width direction (Transverse Direction, TD). The specimen is divided into four parts of 15 mm × 40 mm in the longitudinal direction (MD) × width direction (TD). The four divided specimens are placed into a vial and sealed. The sealed vial is placed into a moisture measuring device (for example, Metrohm 917 Coulometer), and moisture content vaporized from the vial at a temperature of 150°C is measured and confirmed as the moisture regain of the cell pouch film. Measurement conditions are a temperature of 150°C and a gas flow rate of 50 mL/min.

In an embodiment, when the moisture regain of the cell pouch film exceeds 1300 ppm, a level of thermal deformation bubbles increases, resulting in a defective appearance, and mechanical properties such as heat seal strength and yield strength may deteriorate.

In an embodiment, a lower limit value of a moisture regain of the cell pouch film may be at least 300 ppm or more in view of formability.

In an exemplary embodiment, the moisture regain of the cell pouch film may be 1300 ppm or less, 1250 ppm or less, 1200 ppm or less, 1150 ppm or less, 1100 ppm or less, 1050 ppm or less, 1000 ppm or less, 950 ppm or less, 900 ppm or less, 850 ppm or less, 800 ppm or less, 750 ppm or less, 700 ppm or less, 650 ppm or less, 600 ppm or less, 550 ppm or less, 500 ppm or less, 450 ppm or less, 400 ppm or less, or 350 ppm or less. Alternatively, it may be 300 ppm or more, 350 ppm or more, 400 ppm or more, 450 ppm or more, 500 ppm or more, 550 ppm or more, 600 ppm or more, 650 ppm or more, 700 ppm or more, 750 ppm or more, 800 ppm or more, 850 ppm or more, 900 ppm or more, 950 ppm or more, 1000 ppm or more, 1050 ppm or more, 1100 ppm or more, 1150 ppm or more, 1200 ppm or more, or 1250 ppm or more.

In an exemplary embodiment, the moisture regain of the cell pouch film is preferably 1200 ppm or less, 1100 ppm or less, or 1000 ppm or less, and, for example, may be 300 ppm to 1200 ppm, or more preferably 300 ppm to 1000 ppm. Alternatively, it may be 350 ppm to 950 ppm, or 400 ppm to 900 ppm, or 450 ppm to 850 ppm, or 500 ppm to 800 ppm, or 550 ppm to 750 ppm, or 600 ppm to 700 ppm.

As the moisture content in the cell pouch film decreases, yield strength increases and toughness decreases, so that deformation amount tends to decrease. Particularly, when the moisture content of the cell pouch film is less than the above-described lower limit, deformation amount becomes small and formability may deteriorate. Meanwhile, when the moisture content of the cell pouch film exceeds the above-described upper limit, there is a concern that defective appearance of thermal deformability or bubble defect may occur during sealing, and mechanical properties such as heat seal strength and yield strength may deteriorate.

Although layer structures and each layer material and composition of the cell pouch film may vary, the inventors have found that the resultant moisture regain of the cell pouch film is an indicator capable of confirming formability of the cell pouch and whether defective appearance or bubble defect occurs during heat sealing. Therefore, by controlling the moisture regain of the cell pouch film, the formability of the cell pouch and whether defective appearance or bubble defect occurs during heat sealing can be easily controlled. The moisture regain of the cell pouch film may be mainly influenced by the moisture content of a nylon layer (film) of the outer layer.

In an exemplary embodiment, a yield strength of the cell pouch film may be 120 *N*/*15* mm to 150 N/15 mm or 130 N/15 mm to 150 N/15 mm.

The yield strength or yield stress means a boundary point from elastic deformation to plastic deformation in tensile stress or tensile strength, which is a force measured when a force is applied to an object. When a specimen is elongated in proportion to an increase in load and then, after exceeding an elastic limit, starts to elongate not in proportion to the load, this is called a yield point. In the present invention, an upper yield point where the specimen starts to elongate is selected.

More specifically, the yield strength of the film may be 120 N/15 mm or more, 121 N/15 mm or more, 122 N/15 mm or more, 123 N/15 mm or more, 124 N/15 mm or more, 125 N/15 mm or more, 126 N/15 mm or more, 127 N/15 mm or more, 128 N/15 mm or more, 129 N/15 mm or more, 130 N/15 mm or more, 131 N/15 mm or more, 132 N/15 mm or more, 133 N/15 mm or more, 134 N/15 mm or more, 135 N/15 mm or more; 150 *N*/*15* mm or less, 149 N/15 mm or less, 148 N/15 mm or less, 147 N/15 mm or less, 146 N/15 mm or less, 145 N/15 mm or less, 144 N/15 mm or less, 143 N/15 mm or less, 142 N/15 mm or less, 141 N/15 mm or less, 140 N/15 mm or less, 139 N/15 mm or less, 138 N/15 mm or less, 137 N/15 mm or less, 136 N/15 mm or less, 135 N/15 mm or less, 134 N/15 mm or less, but is not limited thereto. More specifically, the yield strength of the film may be 130 N/15 mm or more, 131 N/15 mm or more, 132 N/15 mm or more, 132.84 N/15 mm or more, 133 N/15 mm or more, 134 N/15 mm or more, 135 N/15 mm or more; 150 N/15 mm or less, 149 N/15 mm or less, 148 N/15 mm or less, 147 N/15 mm or less, 146 N/15 mm or less, 145 N/15 mm or less, 144 N/15 mm or less, 143 N/15 mm or less, 142.94 N/15 mm or less, 142 N/15 mm or less, 141 N/15 mm or less, 140 N/15 mm or less, 139 N/15 mm or less, 138 N/15 mm or less, 137 N/15 mm or less, 136 N/15 mm or less, 135 N/15 mm or less, but is not limited thereto.

In an embodiment, the yield strength of the film may be measured using a Universal Testing Machine (UTM) under conditions of a test speed of 50 mm/min and a grip-to-grip distance of 50 mm. More specifically, a measurement temperature of the yield strength may be 50°C or more, 100°C or more, 150°C or more, 200°C or more; 300°C or less, 250°C or less, or 200°C or less, but is not limited thereto.

In an embodiment, a heat seal strength of the cell pouch film may be 128 N/15 mm or more, 129 N/15 mm or more, 130 N/15 mm or more, 131 N/15 mm or more, 132 N/15 mm or more, 133 N/15 mm or more, 134 N/15 mm or more; 140 N/15 mm or less, 139 N/15 mm or less, 138 N/15 mm or less, 137 N/15 mm or less, 136 N/15 mm or less, 135 N/15 mm or less, or 134 N/15 mm or less, but is not limited thereto.

In an embodiment, formability of the cell pouch film is preferably more than 15 mm, and in a case of a medium or large secondary battery, is particularly preferably 16 mm or more. An upper limit of the formability of the film is not limited.

In an embodiment, the formability of the film is 16 mm to 19 mm. More specifically, the formability of the film may be more than 15 mm, 15.2 mm or more, 15.4 mm or more, 15.6 mm or more, 15.8 mm or more, 16 mm or more, 16.2 mm or more, 16.4 mm or more, 16.6 mm or more, 16.8 mm or more, 17 mm or more; 19 mm or less, 18.8 mm or less, 18.6 mm or less, 18.4 mm or less, 18.2 mm or less, 18 mm or less, 17.8 mm or less, 17.6 mm or less, 17.4 mm or less, 17.2 mm or less, or 17 mm or less, but is not limited thereto.

When forming is performed on a specimen cut from a cell pouch film and depth is measured, if none of 10 out of 10 specimens are broken at that depth, a deeper depth is applied, and when even one is broken, the immediately preceding depth is measured as maximum depth, and formability is measured.

In an embodiment, the outer layer includes at least nylon and may further include polyethylene terephthalate (PET). The outer layer may further include one or more resins selected from the group consisting of polybutylene adipate terephthalate (PBAT), polybutylene succinate (PBS), polyhydroxy aldehyde (PHA), polylactic acid (PLA), thermoplastic starch (TPS), polyvinyl alcohol (PVA), polycaprolactam (PCL), polyethylene (PE), polypropylene (PP), ethylene vinyl acetate (EVA), ethylene vinyl alcohol (EVOH), and polyvinylidene chloride (PVDC). The outer layer is required to have properties such as heat resistance, pin-hole resistance, chemical resistance, abrasion resistance, formability, and insulation property. The outer layer may be composed of a plurality of layers.

As described above, in an embodiment, the outer layer preferably includes nylon, and preferably may be composed of a PET layer and a nylon layer. In an embodiment, the PET layer may have a thickness of 12 to 25 µm and the nylon layer may have a thickness of 3 to 30 µm.

In an exemplary embodiment, the nylon layer (film) may have a moisture regain of 4000 ppm to 10000 ppm, or a moisture content of 300 *µg* to 900 *µg,* or a moisture amount ratio of nylon to a total weight of the cell pouch film of 70% to 87%.

The nylon has a property of absorbing moisture, and when the nylon absorbs moisture, strength and elastic modulus decrease compared with when dried, and toughness increases. On the contrary, dried nylon increases in strength and elastic modulus and decreases in toughness. In view of heat seal strength, since strength and elastic modulus of a substrate should be high, it is necessary to manage moisture so that the nylon of the outer layer does not absorb moisture, thereby improving heat seal strength. The moisture amount of nylon affects an overall moisture regain of the cell pouch film, and the moisture regain may affect not only heat seal strength but also yield strength, appearance properties such as thermal deformation bubbles and the like, and formability.

In an exemplary embodiment, the moisture regain of the nylon layer (film) may be 10000 ppm or less, 9900 ppm or less, 9800 ppm or less, 9700 ppm or less, 9600 ppm or less, 9500 ppm or less, 9400 ppm or less, 9300 ppm or less, 9200 ppm or less, 9100 ppm or less, 9000 ppm or less, 8900 ppm or less, 8800 ppm or less, 8700 ppm or less, 8600 ppm or less, 8500 ppm or less, 8400 ppm or less, 8300 ppm or less, 8200 ppm or less, 8100 ppm or less, 8000 ppm or less, 7900 ppm or less, 7800 ppm or less, 7700 ppm or less, 7600 ppm or less, 7500 ppm or less, 7400 ppm or less, 7300 ppm or less, 7200 ppm or less, 7100 ppm or less, 7000 ppm or less, 6900 ppm or less, 6800 ppm or less, 6700 ppm or less, 6600 ppm or less, 6500 ppm or less, 6400 ppm or less, 6300 ppm or less, 6200 ppm or less, 6100 ppm or less, 6000 ppm or less, 5900 ppm or less, 5800 ppm or less, 5700 ppm or less, 5600 ppm or less, 5500 ppm or less, 5400 ppm or less, 5300 ppm or less, 5200 ppm or less, 5100 ppm or less, 5000 ppm or less, 4900 ppm or less, 4800 ppm or less, 4700 ppm or less, 4600 ppm or less, 4500 ppm or less, 4400 ppm or less, 4300 ppm or less, 4200 ppm or less, or 4100 ppm or less. Alternatively, it may be 4000 ppm or more, 4100 ppm or more, 4200 ppm or more, 4300 ppm or more, 4400 ppm or more, 4500 ppm or more, 4600 ppm or more, 4700 ppm or more, 4800 ppm or more, 4900 ppm or more, 5000 ppm or more, 5100 ppm or more, 5200 ppm or more, 5300 ppm or more, 5400 ppm or more, 5500 ppm or more, 5600 ppm or more, 5700 ppm or more, 5800 ppm or more, 5900 ppm or more, 6000 ppm or more, 6100 ppm or more, 6200 ppm or more, 6300 ppm or more, 6400 ppm or more, 6500 ppm or more, 6600 ppm or more, 6700 ppm or more, 6800 ppm or more, 6900 ppm or more, 7000 ppm or more, 7100 ppm or more, 7200 ppm or more, 7300 ppm or more, 7400 ppm or more, 7500 ppm or more, 7600 ppm or more, 7700 ppm or more, 7800 ppm or more, 7900 ppm or more, 8000 ppm or more, 8100 ppm or more, 8200 ppm or more, 8300 ppm or more, 8400 ppm or more, 8500 ppm or more, 8600 ppm or more, 8700 ppm or more, 8800 ppm or more, 8900 ppm or more, 9000 ppm or more, 9100 ppm or more, 9200 ppm or more, 9300 ppm or more, 9400 ppm or more, 9500 ppm or more, 9600 ppm or more, 9700 ppm or more, 9800 ppm or more, or 9900 ppm or more.

In an exemplary embodiment, the moisture content of the nylon layer (film) may be *300 µg* or more, 350 *µg* or more, 400 *µg* or more, 450 *µg* or more, 500 *µg* or more, 550 *µg* or more, 600 *µg* or more, 650 *µg* or more, 700 *µg* or more, 800 *µg* or more, or 850 *µg* or more. Alternatively, it may be 900 *µg* or less, 850 *µg* or less, 800 *µg* or less, *750 µg* or less, 700 *µg* or less, 650 *µg* or less, 600 *µg* or less, 550 *µg* or less, 500 *µg* or less, 450 *µg* or less, 400 *µg* or less, or 350 *µg* or less.

In an exemplary embodiment, a ratio of the moisture amount of the nylon layer in the outer layer to a total weight of the cell pouch film may be 70% to 87%.

In an exemplary embodiment, a ratio of the moisture content of the nylon layer in the outer layer to a total weight of the cell pouch film may be 70% or more, 71 % or more, 72% or more, 73% or more, 74% or more, 75% or more, 76% or more, 77% or more, 78% or more, 79% or more, 80% or more, 81% or more, 82% or more, 83% or more, 84% or more, 85% or more, 86% or more. Alternatively, it may be 87% or less, 86% or less, 85% or less, 84% or less, 83% or less, 82% or less, 81% or less, 80% or less, 79% or less, 78% or less, 77% or less, 76% or less, 75% or less, 74% or less, 73% or less, 72% or less, or 71 % or less.

In an embodiment, a metal constituting the barrier layer, specifically a metal constituting a metal thin film or a metal deposition layer, may be, for example, one or more (a single metal or a mixture of a single metal) selected from the group consisting of aluminum (Al), iron (Fe), copper (Cu), nickel (Ni), tin (Sn), zinc (Zn), indium (In), tungsten (W), and the like, an alloy of two or more thereof, or the like. In an embodiment, the metal of the barrier layer is aluminum or an alloy thereof. The barrier layer is required to have properties such as barrier property against water vapor or other gases, and formability. In addition, the barrier layer may be used in a surface-treated form by phosphoric acid, chromium, or the like for corrosion resistance.

In an embodiment, the cell pouch film may further include an adhesion layer formed on the other surface of the barrier layer, and a sealant layer formed on the other surface of the adhesion layer.

In an embodiment, the sealant layer includes one or more polyolefin resins selected from the group consisting of polypropylene, low-density polyethylene, linear low-density polyethylene, ultra-low-density polyethylene, medium-density polyethylene, high-density polyethylene, polybutene, and ethylene/propylene copolymer. The sealant layer is required to have properties such as heat resistance, cold resistance, heat sealing property, and formability, and since the sealant layer is a layer contacting an electrolyte, properties such as electrolyte resistance and insulation resistance are also required. The sealant layer may be composed of a plurality of layers.

In an embodiment, both surfaces of the barrier layer are surface-treated. In an embodiment, the surface treatment layer may be a surface treatment layer by phosphoric acid, chromium, zirconium, cerium, lanthanum, or the like, in order to provide corrosion resistance of the metal.

In an embodiment, the adhesion layer may include one or more selected from epoxy-based adhesive, polyurethane-based adhesive, phenolic resin-based adhesive, polyester-based adhesive, and polyolefin-based adhesive. In an embodiment, the inner surface adhesion layer and the outer surface adhesion layer may each have a thickness of 0.5 µm to 10 µm.

In an embodiment, the barrier layer may have a thickness of 5 µm to 100 µm. When the thickness of the barrier layer is less than 5 µm, implementation as a cell pouch of a secondary battery is not easy, and when the thickness of the barrier layer exceeds 100 µm, capacity of the battery may be drastically reduced in a bendability test of the cell pouch.

In an embodiment, the outer layer may have a thickness of 5 µm to 50 µm.

In an embodiment, the sealant layer may have a thickness of 5 µm to 100 µm.

In an embodiment, an extrusion resin layer may be further formed between the inner surface adhesion layer and the sealant layer. The extrusion resin layer may improve bendability, adhesion property, insulation property, and the like of the pouch. In an embodiment, the extrusion resin layer may include an olefin-based resin such as a polypropylene-based resin.

In another embodiment, the inner surface adhesion layer may be omitted, and the extrusion resin layer and the sealant layer may constitute an inner layer of the cell pouch film. When the inner surface adhesion layer is absent as described above, the extrusion resin layer may serve as a role of the inner surface adhesion layer.

In an embodiment, the extrusion resin layer may have a thickness of 5 µm to 80 µm.

### Method of Initially Adjusting Moisture regain of Cell Pouch Film

In an exemplary embodiment, in order to maintain the moisture regain of the cell pouch film, after an initial manufacturing process, drying may be performed under conditions in which moisture may escape. More specifically, the condition may include, for example, a temperature of 40°C to 100°C, a relative humidity (RH) of 15% or less, and a drying time of 10 hours or more.

Thereafter, in order to maintain the moisture content of the film, the film may be stored by a storing method described below, or may be managed at a dew point or less.

### Method of Storing Cell Pouch Film

In other exemplary embodiments of the present invention, there is provided a storing method for adjusting one or more of storing conditions of the cell pouch film, particularly relative humidity and temperature, such that a saturated moisture regain of the cell pouch film becomes 1300 ppm or less.

In an embodiment, among the storing conditions of the cell pouch film, relative humidity is preferably in an environment of 5% or more to less than 25%, more preferably 5% or more to 22% or less.

More specifically, the relative humidity may be 5% or more, 6% or more, 7% or more, 8% or more, 9% or more, 10% or more, 11% or more, 12% or more, 13% or more, 14% or more, 15% or more, 16% or more, 17% or more, 18% or more, 19% or more, 20% or more, 21% or more. Alternatively, it may be less than 25%, 24% or less, 23% or less, 22% or less, 21% or less, 20% or less, 19% or less, 18% or less, 17% or less, 16% or less, 15% or less, 14% or less, 13% or less, 12% or less, 11% or less, 10% or less, 9% or less, 8% or less, 7% or less, or 6% or less, but is not limited thereto.

In an embodiment, among storing conditions of the cell pouch film, a storing temperature includes storing at a temperature of 25°C. More specifically, the storing temperature may be 15°C or more, 16°C or more, 17°C or more, 18°C or more, 19°C or more, 20°C or more, 21°C or more, 22°C or more, 23°C or more, 24°C or more, 25°C or more; 35°C or less, 34°C or less, 33°C or less, 32°C or less, 31°C or less, 30°C or less, 29°C or less, 28°C or less, 27°C or less, 26°C or less, or 25°C or less, but is not limited thereto.

In an embodiment, in the method for storing a cell pouch film, for example, until 48 hours of storing time, the storing time may be adjusted to change a level of moisture regain. When the storing time exceeds 48 hours, even if the storing time further increases, the level of the moisture regain of the cell pouch film may be maintained at a constant level (that is, may reach a saturated level).

More specifically, the storing time may be more than 0 minutes, 5 minutes or more, 10 minutes or more, 20 minutes or more, 30 minutes or more, 1 hour or more, 2 hours or more, 8 hours or more, 12 hours or more, 16 hours or more, 20 hours or more, 24 hours or more, 28 hours or more, 32 hours or more, 36 hours or more, 40 hours or more, 44 hours or more, or 48 hours or more. Alternatively, the storing time may be 6 months or less, 1 month or less, 1 week or less, 144 hours or less, 120 hours or less, 96 hours or less, 72 hours or less, 60 hours or less, 56 hours or less, 52 hours or less, 48 hours or less, 44 hours or less, 40 hours or less, 36 hours or less, 32 hours or less, 28 hours or less, 24 hours or less, 20 hours or less, 16 hours or less, 12 hours or less, 8 hours or less, 2 hours or less, 1 hour or less, 30 minutes or less, 20 minutes or less, 10 minutes or less, or 5 minutes or less, but is not limited thereto.

According to an embodiment of the present invention, as described above, by adjusting temperature and relative humidity, even when the cell pouch film is stored for a long period, a saturated moisture content may preferably be maintained at 1300 ppm or less. Accordingly, formability, thermal deformation appearance property, and mechanical properties such as yield strength and heat seal strength may be excellent.

### Cell Pouch

In an embodiment of the present invention, a cell pouch film is suitable for a cell pouch application because formability, thermal deformation appearance property, and mechanical properties such as yield strength and heat seal strength are excellent.

In other exemplary embodiments of the present invention, there is provided a cell pouch comprising the above-described cell pouch film.

### Method of Moisture-Blocking Packaging for Cell Pouch

In an embodiment of the present invention, the cell pouch may be packaged by moisture-blocking packaging and may be distributed in a packaged state.

In an exemplary embodiment, a cell pouch packaging structure may include a cylindrical tube 10 and a cell pouch 50 wound thereon, and an inner packaging material 80 surrounding the cell pouch 50 in at least one layer or more. Additionally, an outer packaging material 180 surrounding the inner packaging material 80 may be further included.

In an exemplary embodiment, the inner packaging material is a moisture-blocking packaging material and may have a water vapor transmission rate (WVTR) of 0.1 g/m²·day to 1.0 g/m²·day. The inner packaging material may include vacuum metallized cast polypropylene (VMCPP) or an aluminum bag (Al bag). The aluminum bag may include nylon, aluminum, and linear low-density polyethylene (LLDPE) laminated sequentially.

In an exemplary embodiment, the cylindrical tube may include polypropylene (PP).

In an exemplary embodiment, the outer packaging material may be formed of sheet-shaped Styrofoam, wound on the inner packaging material, and an end of the outer packaging material may be attached to an inner end of the outer packaging material by tape at the end of the outer packaging material.

### Secondary Battery and Manufacturing Method Thereof

In other exemplary embodiments of the present invention, there is provided a secondary battery encapsulated with the above-described cell pouch film.

In an exemplary embodiment, the secondary battery may be a medium or large secondary battery for an electric vehicle or an energy storage device.

In other exemplary embodiments of the present invention, there is provided a method of manufacturing a secondary battery comprising a step of encapsulating a secondary battery with the above-described cell pouch film.

Hereinafter, the present invention will be described in detail with reference to preferred embodiments so that those of ordinary skill in the art to which the present invention pertains may readily carry out the present invention. However, the present invention may be implemented in various different ways and is not limited to the embodiments described herein.

### {Experiment 1}

### <Manufacturing Example 1> Manufacturing of Cell Pouch Film

A barrier layer of 60 µm composed of an aluminum foil metal sheet was formed, and then an adhesion layer was formed on both surfaces of the barrier layer. Subsequently, on one surface of the adhesion layer, an outer layer of 41-42 µm including polyethylene terephthalate (PET) and nylon (Nylon: 25 µm; PET: 12 µm; adhesive: 4-5 µm) was formed, and on the other surface of the adhesion layer, a sealant layer of 80 µm was formed by laminating a cast polypropylene film. Thereafter, drying was performed for 10 hours under a temperature of 70°C and a relative humidity (RH) of 10% to manufacture a cell pouch film. The manufactured cell pouch film was packaged with an aluminum bag at a dew point or less, and the moisture content was managed.

### <Test 1> Adjustment and Measurement of Moisture regain of Cell Pouch Film

For the cell pouch film manufactured above, after removing the aluminum bag, the moisture regain of the cell pouch film was adjusted differently while varying relative humidity from less than 2% to 50% at 25°C, and each moisture regain was measured.

As described above, for measuring the moisture regain, a specimen of the cell pouch film was prepared by cutting into 60 mm × 40 mm in the longitudinal direction (Machine direction, MD) × width direction (Transverse direction, TD). The specimen was then divided into four equal parts of 15 mm × 40 mm in the longitudinal direction (MD) × width direction (TD). The specimen was placed into a vial and sealed. Using a Karl Fischer moisture measuring device (Metrohm 917 Coulometer), the moisture amount vaporized from the sealed vial was measured at a temperature of 150°C, and the moisture regain was measured. Measurement conditions were: specimen temperature of 150°C and gas flow rate of 50 mL/min. After measurement, the moisture regain of the specimen was confirmed.

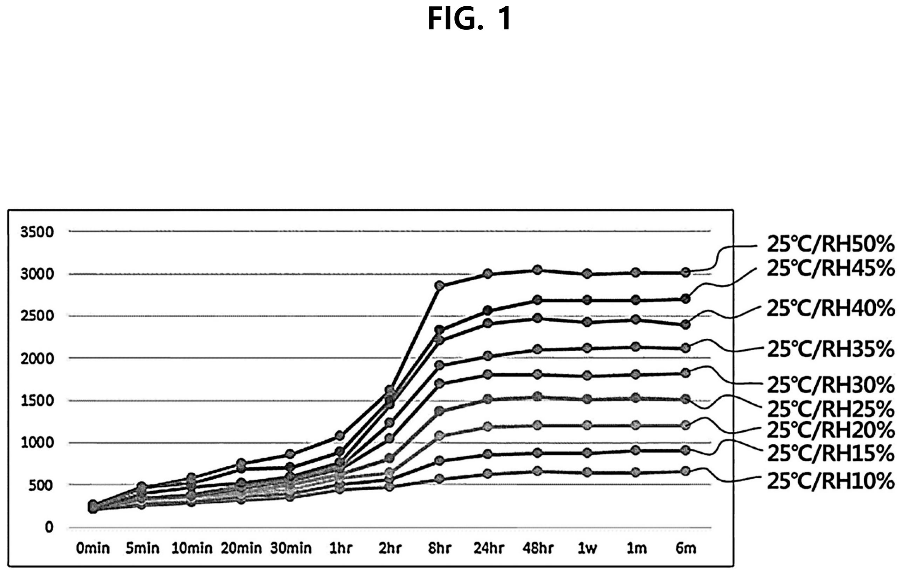

Changes of the moisture regain according to time and relative humidity conditions at 25°C were shown in Table 1 and FIG. 1.

**[Table 1]**

| | | | | | | | | | | | | | |
|---|---|---|---|---|---|---|---|---|---|---|---|---|---|
| | 0min | 5min | 10min | 20min | 30 min | 1hr | 2hr | 8hr | 24 hr | 48 hr | 1w | 1m | 6m |
| 25°C/RH | 215 | 258 | 286 | 323 | 356 | 44 | 48 | 56 | 636 | 654 | 63 | 64 | 65 |
| 10% | | | | | | 2 | 1 | 7 | | | 9 | 5 | 7 |
| 25°C/RH | 220 | 294 | 306 | 361 | 399 | *50* | 56 | 78 | 869 | 884 | 87 | 91 | 90 |
| 15% | | | | | | 2 | 7 | 5 | | | 5 | 4 | 1 |
| 25°C/RH | 226 | 328 | 346 | 395 | 448 | 57 | 64 | 10 | 118 | 120 | 11 | 12 | 12 |
| 20% | | | | | | 7 | 0 | 84 | 2 | 4 | 97 | 00 | 06 |
| 25°C/RH | 217 | 329 | 367 | 419 | 503 | 63 | 81 | 13 | *150* | 154 | 15 | 15 | 15 |
| 25% | | | | | | 2 | 3 | 65 | 4 | 1 | 11 | 23 | 17 |
| 25°C/RH | 216 | 356 | 366 | 462 | 546 | 69 | 10 | 16 | 180 | 180 | 17 | 18 | 18 |
| 30% | | | | | | 8 | 42 | 98 | 4 | 6 | 96 | 11 | 24 |
| 25°C/RH | 206 | 333 | 388 | 496 | 568 | 72 | 12 | 19 | 202 | 210 | 21 | 21 | 21 |
| 35% | | | | | | 6 | 29 | 14 | 2 | 6 | 19 | 34 | 08 |
| 25°C/RH | 232 | 401 | 480 | 521 | 603 | 77 | 14 | 22 | 240 | 246 | 24 | 24 | 24 |
| 40% | | | | | | 1 | 46 | 04 | 1 | 9 | 18 | 49 | 00 |
| 25°C/RH | 260 | 479 | 516 | 699 | 709 | 88 | 15 | 23 | 256 | 268 | 26 | 26 | 26 |
| 45% | | | | | | 6 | 14 | 33 | 9 | 4 | 79 | 88 | 94 |
| 25°C/RH | 241 | 463 | 586 | 757 | 864 | 10 | 16 | 28 | 299 | 304 | 30 | 30 | 30 |
| *50%* | | | | | | 85 | 15 | 52 | 5 | 5 | 02 | 11 | 15 |

As can be seen from Table 1 and FIG. 1, although the moisture regain of the cell pouch film changes according to variation of relative humidity and time, it can be seen that, under all relative humidity conditions, after about 8 hours or 24 hours or at least 48 hours, the moisture regain does not change more and reaches a saturated level.

In addition, the moisture regain of each Example and Comparative Example is described in Tables 2 and 3 below.

### <Test 2> Measurement of Yield Strength of Cell Pouch Film

The yield strength was measured for each cell pouch film. More specifically, a specimen was prepared by cutting the cell pouch film into 150 mm × 15 mm in the longitudinal direction (Machine Direction, MD) × width direction (Transverse Direction, TD). The yield strength of the specimen was measured by using a Universal Testing Machine (UTM, manufacturer: INSTRON) in accordance with ASTM D638, under conditions of a test speed of 50 mm/min and a grip-to-grip distance of 50 mm. The yield strength was measured by determining a boundary point at which a specimen transitions from elastic deformation to plastic deformation.

The yield strength of each Example and Comparative Example is described in Tables 2 and 3 below.

### <Test 3> Evaluation of heat seal strength of Cell Pouch Film

The heat seal strength was evaluated for each cell pouch film. More specifically, a specimen was prepared by cutting the cell pouch film. The cut specimen was folded in the width direction (TD). The heat sealing conditions were set to 1.6 seconds, 0.2 MPa, and 200°C using a seal bar. The prepared heat-sealed specimen was cut into 200 mm × 100 mm in the longitudinal direction (MD) × width direction (TD) by using a 15 mm cutter. The heat seal strength of the specimen was measured by using a Universal Testing Machine (UTM, manufacturer: INSTRON) under conditions of a test speed of 50 mm/min and a grip-to-grip distance of 50 mm. After being left at room temperature for 3 minutes, the measurement was conducted, and the maximum point of sealing strength was selected as the maximum strength during measurement of sealing strength.

The heat seal strength of each Example and Comparative Example is described in Tables 2 and 3 below.

### <Test 4> Evaluation of Thermal Deformability of Cell Pouch Film

The thermal deformability was evaluated for each manufactured cell pouch film. More specifically, bubbles formed in the cell pouch film were evaluated according to the following criteria. As described above, thermal deformation means that, during a heat sealing process of manufacturing a cell pouch, moisture contained in an amount or more in the pouch is vaporized in the nylon film and appears as bubbles, and the evaluation of thermal deformability is an evaluation of whether bubbles occur in the pouch through heat sealing. The evaluation procedure of thermal deformability is as follows.

### Thermal Deformability Evaluation

(1) A specimen was prepared by cutting the cell pouch film into 200 mm in horizontal length and 100 mm in vertical length.
(2) The specimen was folded in half in the vertical direction to make 200 mm in horizontal length and 50 mm in vertical length.
(3) Heat sealing was performed in the horizontal direction. Heat sealing temperature was 220°C, heat sealing pressure was 0.2 MPa, and heat sealing time was 1.6 seconds.
(4) After heat sealing, the thermal deformability was confirmed by the naked eye or with a Lupe (magnifier).

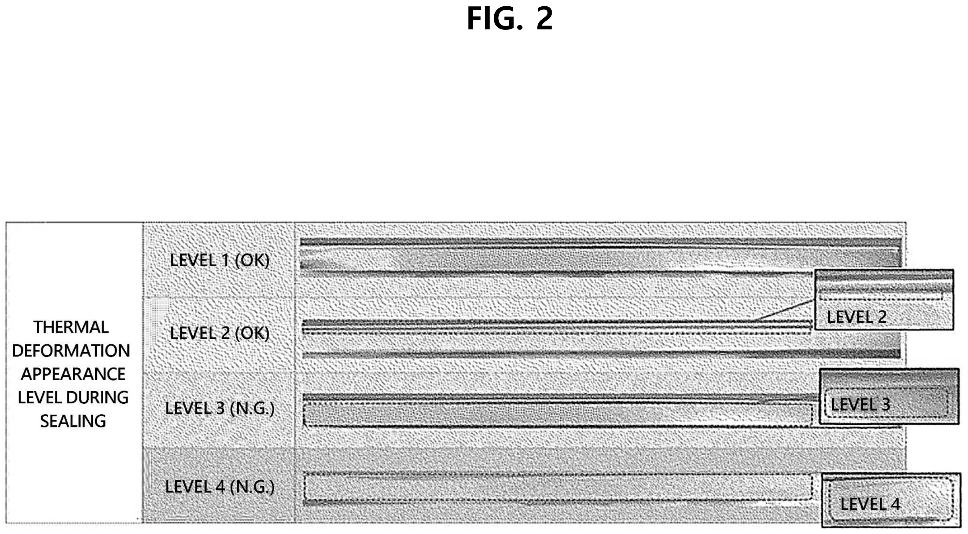

FIG. 2 is an image showing an evaluation criterion of thermal deformability of a cell pouch film according to an embodiment of the present invention.
Level 1: No bubble formed (OK)
Level 2: Not well visible to the naked eye but confirmed with a Lupe (magnifier), with fine dots at the sealing part line/outside (OK)
Level 3: Fine bubbles present on the entire surface of the sealing part (N.G.)
Level 4: Large bubbles present on the entire surface of the sealing part (N.G.)

The results are shown in Tables 2 and 3 below.

### <Test 5> Evaluation of Formability of Cell Pouch Film

The formability was evaluated for each manufactured cell pouch film. More specifically, a specimen of 240 mm × 266 mm was taken in the longitudinal direction (MD) and width direction (TD) from a wound roll. The taken specimen was formed into a rectangular shape (190 mm in horizontal length and 90 mm in vertical length). (Formability was evaluated by forming one cup using a high-forming pouch formability evaluation apparatus coated with chromium, with the reference corner R-value being 4, although the R-value varied.) The forming pressure was fixed at 0.5 MPa. When the depth after forming was measured, if none of 10 out of 10 specimens are broken at that depth, a deeper depth was applied, and when even one specimen broke, the immediately preceding depth was defined as the maximum depth, and the formability was defined accordingly. The results are shown in Tables 2 and 3 below.

### <Test Results>

**[Table 2]**

| Storing condition | 25°C RH 5% | 25°C RH 10% | 25°C RH 15% | 25°C RH 20% |
|---|---|---|---|---|
| Example | Example 1 | Example 2 | Example 3 | Example 4 |
| Moisture regain (ppm) | 300 | 600 | 900 | 1200 |
| Thermal deformation (Bubble) | Level 1 | Level 1 | Level 1 | Level 1 |
| Forming depth (mm) | 16 | 16 | 16 | 16 |
| Yield strength (15mm/N) | 148.97 | 142.94 | 137.44 | 132.84 |
| Heat seal strength (15mm/N) | 145.39 | 142.51 | 138.81 | 138.68 |

**[Table 3]**

| Storing condition | 25°C RH < 2% | 25°C RH 30% | 25°C RH 35% | 25°C RH 40% | 25°C RH 45% | 25°C RH 50% |
|---|---|---|---|---|---|---|
| Comparative Example | Comparative Example 1 | Comparative Example 2 | Comparative Example 3 | Comparative Example 4 | Comparative Example 5 | Comparative Example 6 |
| Moisture regain (ppm) | 100 | 1800 | 2100 | 2400 | 2700 | 3000 |
| Thermal deformation (Bubble) | Level 1 | Level 3 | Level 3 | Level 4 | Level 4 | Level 4 |
| Forming depth (mm) | 15 | 17 | 18 | 18 | 18 | 18 |
| Yield strength (15mm/N) | 150.03 | 126.56 | 124.16 | 122.87 | 120.66 | 118.92 |
| Heat seal strength (15mm/N) | 145.53 | 137.32 | 137.20 | 136.39 | 133.81 | 135.57 |

As can be seen from Tables 2 and 3, in the case of the cell pouch films of the Examples, the mechanical properties of yield strength and heat seal strength are excellent, and the characteristics of formability and level of thermal deformation bubbles are also excellent.

### [Experiment 2]

As in the manufacturing example of Experiment 1, a cell pouch film was manufactured, and the saturated moisture regain (ppm) of the cell pouch film, the moisture regain (ppm) of the nylon (Ny) layer alone, the moisture amount (*µg*) of the nylon (Ny) layer alone, and the moisture amount ratio (%) of the nylon (Ny) layer relative to the total cell pouch film weight were measured together with the thermal deformability bubble level.

The measurement of the moisture regain (ppm) of the nylon (Ny) layer (film) alone, the moisture amount (*µg*) of the nylon (Ny) layer (film) alone, and the moisture amount ratio (%) of the nylon (Ny) layer (film) relative to the total cell pouch film weight was carried out by storing the nylon (Ny) layer (film) used in the outer layer of the cell pouch film alone under the same temperature and relative humidity conditions as those of the cell pouch film, and then measuring.

In Table 4 below, the moisture regain of the cell pouch film is the moisture regain at the point where the moisture regain does not increase more and starts to be saturated, and when the nylon (Ny) layer (film) alone was stored under the same condition in which the corresponding moisture regain is measured, the moisture regain (ppm) of the nylon (Ny) layer (film) alone, the moisture amount (*µg*) of the nylon (Ny) film alone, and the moisture amount ratio (%) of the nylon (Ny) layer (film) relative to the total cell pouch film weight were measured.

The measurement method of the moisture regain or moisture amount is the same as the measurement method of the moisture regain or moisture content of the cell pouch film described above. That is, a dried nylon (Ny) film was prepared by cutting a specimen into 60 mm × 40 mm in the longitudinal direction (Machine Direction, MD) × width direction (Transverse Direction, TD). The specimen was then divided into four equal parts of 15 mm × 40 mm in the longitudinal direction (MD) × width direction (TD). The specimen was placed into a vial and sealed. The moisture amount vaporized from the sealed vial was measured using a Karl Fischer moisture measuring device (Metrohm 917 Coulometer) at a temperature of 150°C, and the moisture content was measured. Measurement conditions were: specimen temperature of 150°C and gas flow rate of 50 mL/min. After the measurement, the moisture regain or moisture amount of the specimen was confirmed.

The thermal deformability bubble level test was performed in the same manner as in Experiment 1.

The results are shown in Table 4 below.

**[Table 4]**

| Level of thermal deformation bubbles | Level 1 (OK) | | Level 2 (OK) | | Level 3 (NG) | | Level 4 (NG) | |
|---|---|---|---|---|---|---|---|---|
| Cell pouch film Moisture regain (ppm) | 533 | 800 | 1050 | 1250 | 1460 | 1600 | 1720 | 2200 |
| Moisture regain of Ny layer alone (ppm) | 4192 | 6039 | 7988 | 9653 | 11559 | 12902 | 13765 | 20369 |
| Moisture amount of Ny layer alone (*µg*) | 358 | 516 | 683 | 836 | 987 | 1103 | 1176 | 1740 |
| Moisture amount of Ny layer relative to total cell pouch film weight (%) | 75.5 | 81.1 | 84.7 | 86.9 | 88.4 | 89.5 | 89.9 | 92.7 |

As can be seen from the above experiment, it can be seen that the moisture regain of the cell pouch film, the moisture regain (ppm) of the nylon (Ny) layer (film) alone, the moisture amount (*µg*) of the nylon (Ny) layer (film) alone, and the moisture amount ratio (%) of the nylon (Ny) layer (film) relative to the total cell pouch film weight are correlated. That is, it can be seen that when the nylon (Ny) layer (film) exceeds a moisture regain of 10000 ppm, or exceeds a moisture amount of 900 *µg*, or when the moisture amount ratio of the nylon (Ny) layer relative to the total cell pouch film weight exceeds 87%, the moisture regain of the cell pouch film also exceeds 1300 ppm, and accordingly, the bubble level becomes defective.

While exemplary embodiments of the present disclosure have been described above with reference to the above-mentioned preferred embodiments, various modifications and alterations may be made without departing from the subject matter and the scope of the disclosure. Accordingly, the appended claims include the modifications or alterations as long as the modifications or alterations fall within the subject matter of the present disclosure.

### [Industrial Applicability]

The cell pouch film of the exemplary embodiments of the present invention is suitable for use in a cell pouch, since the mechanical properties such as formability, thermal deformation appearance property, yield strength, and heat seal strength are excellent. Such a cell pouch may be usefully employed as an outer material of a secondary battery, particularly a medium- and large-sized secondary battery.

## Claims

1. A cell pouch film, comprising:
an outer layer including at least a nylon film;
a barrier layer composed of a metal; and
a sealant layer,
wherein the cell pouch film has a moisture regain, measured as described below, of 1300 ppm or less,
[Method of measuring moisture regain of cell pouch film]
preparing a specimen of the cell pouch film cut into 60 mm × 40 mm in longitudinal direction (Machine Direction, MD) × width direction (Transverse Direction, TD),
dividing the specimen into four equal parts of 15 mm × 40 mm in the longitudinal direction (MD) × width direction (TD),
placing the four divided specimens into a vial and sealing the vial,
placing the sealed vial into a moisture measuring device, measuring moisture content vaporized from the vial at a temperature of 150°C, and
confirming the measured moisture content as the moisture regain of the cell pouch film,
wherein measurement conditions are a temperature of 150°C and a gas flow rate of 50 mL/min.

2. The cell pouch film of claim 1, wherein the moisture regain of the cell pouch film is 300 ppm to 1300 ppm.

3. The cell pouch film of claim 2, wherein the outer layer is composed of a polyethylene terephthalate (PET) film and a nylon film, the barrier layer is composed of aluminum, and the sealant layer comprises a polypropylene layer.

4. The cell pouch film of claim 3, wherein a yield strength of the cell pouch film is 120 N/15 mm to 150 N/15 mm, and the yield strength is measured by using a Universal Testing Machine (UTM) under conditions of a test speed of 50 mm/min and a grip-to-grip distance of 50 mm.

5. The cell pouch film of claim 3, wherein a heat seal strength of the cell pouch film is 128 N/15 mm to 140 N/15 mm, and the heat seal strength is measured by using a Universal Testing Machine (UTM) under conditions of a test speed of 50 mm/min and a grip-to-grip distance of 50 mm.

6. The cell pouch film of claim 3, wherein formability of the film is 16 mm to 19 mm.

7. A method for storing a cell pouch film, comprising:
storing a cell pouch film in an environment of a temperature of 25°C and relative humidity of 5% or more and less than 25%, so that a saturated moisture regain of the cell pouch film becomes 1300 ppm or less.

8. A cell pouch packaging structure comprising a cell pouch, comprising:
the cell pouch film of any one of claims 1 to 6 wound; and
an inner packaging material surrounding the wound cell pouch film in at least one layer or more,
wherein the inner packaging material has a water vapor transmission rate (WVTR) of 0.1 g/m²·day to 1.0 g/m²·day.

9. A secondary battery encapsulated with the cell pouch film of any one of claims 1 to 6.

10. A method of manufacturing a secondary battery, comprising: encapsulating a secondary battery with the cell pouch film of any one of claims 1 to 6.
